Europäisches Patentamt

European Patent Office

Office européen des brevets

(19)

(11) Numéro de publication: **0 502 796 B1**

(12) **FASCICULE DE BREVET EUROPEEN**

(45) Date de publication de fascicule du brevet: **15.02.95**

(51) Int. Cl.⁶: **B29D 12/02**, B29C 70/16, G02C 5/00, G02C 11/02

(21) Numéro de dépôt: **92420059.5**

(22) Date de dépôt: **27.02.92**

(54) **Elément de monture de lunettes en résine synthétique et procédé de fabrication.**

(30) Priorité: **06.03.91 FR 9102882**

(43) Date de publication de la demande:
**09.09.92 Bulletin 92/37**

(45) Mention de la délivrance du brevet:
**15.02.95 Bulletin 95/07**

(84) Etats contractants désignés:
**BE CH DE ES FR GB IT LI LU NL**

(56) Documents cités:
**EP-A- 0 301 631**
**FR-A- 2 594 345**

**WORLD PATENTS INDEX LATEST Section PO, Week 8527, Derwent Publications Ltd.,London, GB; Class P81, AN 85-163348 & JP-A-60 095 422 (HORIKAWA SEISAKUSHO) 28 Septembre 1985**

**MANUFACTURING TECHNOLOGY INTERNATIONAL. 1990, LONDON GB pages 111 - 116; DR J B SAINSBURY-CARTER: 'Prepreg braid and its uses'**

**WORLD PATENTS INDEX Section Ch, Week 7621, Derwent Publications Ltd., London, GB;**

**Class A, AN 76-38781X & JP-A-51 040 945 (SUWA SEIKOSHA KK) 7 Avril 1976**

**WORLD PATENTS INDEX Section Ch, Week 7410, Derwent Publications Ltd., London, GB; Class A, AN 74-18556V & JP-B-49 006 820 (TOKYO SHIBAURA ELECTRIC) 16 Février 1974**

(73) Titulaire: **L'AMY S.A.**
**216 rue de la République**
**F-39400 Morez (FR)**

(72) Inventeur: **Lamy, Marc**
**68, Route des Buclets**
**F-39400 Morbier (FR)**
Inventeur: **Caspar, Jean-Philippe**
**Résidence le Risoux**
**F-39220 Les Rousses (FR)**

(74) Mandataire: **Moinas, Michel**
**Cabinet Michel Moinas**
**13 Chemin du Levant**
**F-01210 Ferney-Voltaire (FR)**

Rank Xerox (UK) Business Services
(3.10/3.09/3.3.3)

## Description

La présente invention est relative à un élément de monture de lunettes en résine synthétique renforcée de fibres, et plus particulièrement à un cercle tenant le verre de lunette ou éventuellement à une branche de monture de lunettes.

On connaît les lunettes en matière plastique fabriquées par injection ou usinage à partir d'acétate de cellulose riche en teintes. L'avantage de la matière plastique est sa légèreté (densité = 1,26), mais sa résistance mécanique est assez faible. La monture de lunettes étant constituée d'une seule matière, les points de sollicitation de celle-ci doivent être renforcés afin d'éviter la rupture. La seule solution est l'augmentation de section qui peut nuire à l'esthétique et majorer le poids de la monture.

On connaît d'autre part les montures de lunettes en métal à base de cuivreux ou de cupronickel, les différents éléments de la monture étant fabriqués dans l'alliage et dans l'état d'écrouissage correspondant aux efforts mécaniques et aux critères esthétiques souhaités. De plus, la possibilité d'utilisation en combinaison de différents éléments permet avec un minimum d'outillage, de fabriquer des montures de tailles et d'aspects différents. La résistance mécanique de telles montures est très importante. En contrepartie, les matériaux étant plus denses (densité = 8 à 9), ces montures sont plutôt lourdes toute proportion gardée. Un développement récent concerne des montures de lunettes en titane présentant une moindre densité et des caractéristiques mécaniques intéressantes. Par contre, la difficulté de transformation, d'assemblage et de finition par traitement galvanique freine ce développement.

Un autre développement a consisté à adjoindre dans la matière plastique des fibres de renfort d'abord sous forme courte, puis sous forme plus longue, éventuellement tressée, conduisant à une famille de montures dite "composite". Le document FR 2 628 538 divulgue de manière très générale une structure composite applicable notamment aux montures de lunettes comprenant un noyau sous la forme d'un réseau unidirectionnel de fils entourés d'une pluralité de couches : matrice intermédiaire, première matrice, couche technique, seconde matrice. La couche technique peut être un produit textile en fibres longues de carbone, verre, aramide, matière végétale ou matière synthétique. La matrice est une matière thermoplastique de façon à pouvoir la former après chauffage. L'une des gaines en matière végétale, tel que le coton, permet entre autre de contenir les fibres pouvant présenter un certain danger lors du bris de l'élément.

Le document JP-A-60 095 422 divulgue un procédé de fabrication d'éléments de monture de lunettes composés de fils parallèles en carbone ou verre ou matière synthétique ou matière organique, ou inorganique enrobés dans une matrice : en l'occurrence un epoxy de bisphénol de type A contenant un agent durcisseur diaminediphenylméthanique. Les fibres parallèles sont d'abord imprégnés de résine à un taux volumique compris entre 40 et 50 pour-cent, puis sont séchées une première fois à basse température avant d'être disposées dans un moule pour leur donner leur forme définitive par cuisson à haute température sous pression.

Toutefois, aussi bien pour ces matériaux composites à couches multiples concentriques ou à noyau de fils parallèles enrobés, les caractéristiques mécaniques se sont révélées très nettement inférieures aux besoins pour les sections se rapprochant de celles des montures métalliques : c'est-à-dire de l'ordre de 2 millimètres carrés.

Le but de la présente invention est un élément de monture de lunettes en résine synthétique renforcée de fibres présentant à la fois des résistances mécaniques importantes pour des sections de l'ordre de 1 à 4 millimètres carrés et une densité inférieure à 2. En particulier, un cercle réalisé selon l'invention doit présenter une résistance à la torsion transversale et un effort de flexion largement suffisant pour tenir en permanence un verre correcteur dans la position correcte sur le visage. Le matériau constituant un tel élément doit bien évidemment toujours rester inerte vis-à-vis de la peau du porteur et ne pas être cassant avec des angles vifs en cas de choc. Il est également nécessaire que de tels éléments puissent être assemblés entre eux sans difficultés particulières pour constituer une monture définitive.

Ces buts sont réalisés, suite à de nombreuses études théoriques, simulations informatiques et essais en atelier, grâce à un élément de monture de lunettes ne comprenant qu'une seule tresse tubulaire périphérique tissée de fibres longues de renfort. De manière particulièrement avantageuse, la tresse tubulaire est tissée de plusieurs fils qui sont chacun composés d'une pluralité, par exemple 3 000, de monofilaments longs et parallèles de carbone. Avantageusement encore, la tresse est un tissage selon le modèle taffetas de 4 à 8 fils avec un angle compris entre 15 et 45 degrés par rapport à l'axe longitudinal de l'élément. Le diamètre de la tresse peut être compris entre 1 et 5 millimètres, et son épaisseur est alors comprise entre 0,1 et 0,5 millimètre.

Selon l'invention, on peut effectuer l'imprégnation de résine polymère soit dans la totalité de l'élément de monture de lunettes, soit dans la tresse tubulaire uniquement, cette dernière restant toujours l'élément essentiel permettant d'obtenir les caractéristiques mécaniques remarquables désirées, et ce en proportion de la faible section et de la légèreté de l'élément, le taux d'imprégnation volumique de résine est en tout cas compris entre 45 et 55 pour-cent.

Lorsque la résine synthétique est un epoxy de bisphénol de type A, il s'est avéré avantageux de lui ajouter 0,1 à 0,8 pour-cent d'un premier durcisseur amine aliphatique et 3 à 15 pour-cent d'un second durcisseur diamine aromatique ; ou de 30 à 50 pour-cent d'un durcisseur unique, par exemple une diamine cyclo aliphatique.

Il est alors possible de rapporter sur un tel élément de monture un ou plusieurs éléments complémentaires soit par insertion dans l'élément encore souple, soit par collage au moyen d'une colle epoxy soit par surmoulage par-dessus l'élément une fois durci. Pour des considérations esthétiques, on peut également envisager de tisser la tresse tubulaire à partir de fils ou monofilaments de couleurs différentes.

Un procédé de fabrication d'un élément de monture de lunettes peut consister à :

- remplir le coeur de la tresse tubulaire de l'élément à l'aide d'un matériau de remplissage inerte telle qu'une mousse de polyuréthane ou des fils de polyester, puis imprégner par l'extérieur la tresse tubulaire de résine,
- élaborer la forme de la section transversale de l'élément que l'on stabilise par déclenchement du premier durcisseur à température inférieure à 100°C,
- façonner la forme tridimensionnelle de l'élément que l'on durcit définitivement par déclenchement du second durcisseur à température supérieure à 160°C. Si désiré, on peut alors retirer le matériau de remplissage du coeur de l'élément qui, même s'il reste en place, ne participe nullement à la tenue mécanique de l'élément.

L'invention sera mieux comprise à l'étude d'un mode de réalisation appliqué à un cercle pris à titre d'exemple nullement limitatif et décrit par les figures annexées dans lesquelles :

- la figure 1 est une vue en perspective d'un morceau de tresse initial,
- la figure 2 est une vue en perspective d'une partie d'un cercle fabriqué selon l'invention, et
- les figures 3a à 3c illustrent schématiquement les différentes étapes d'un procédé de fabrication.

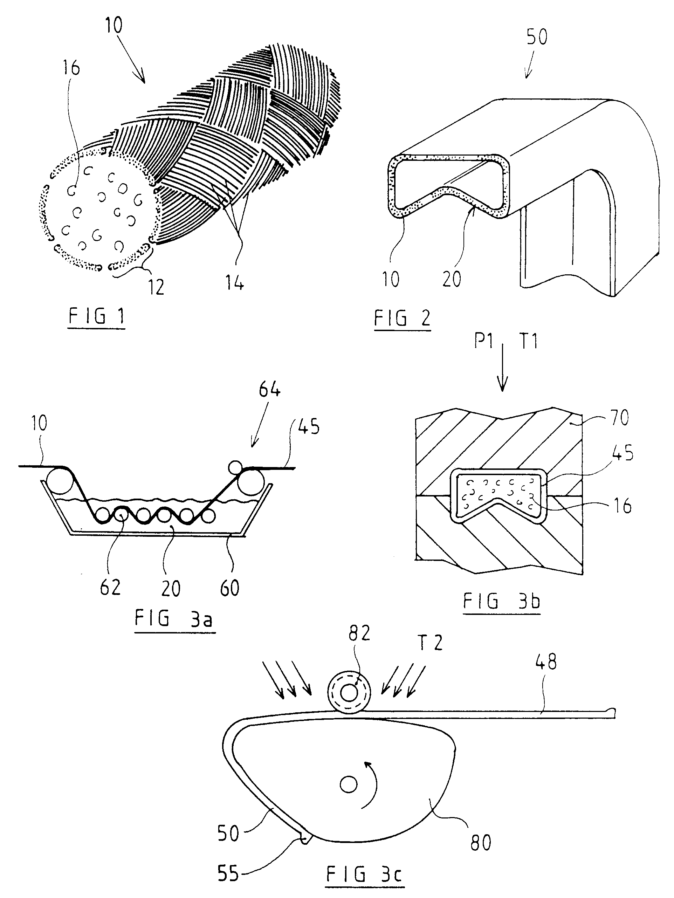

Sur la figure 1 est illustrée une portion de tresse 10 en forme de tube assemblée à partir de six fils 12. Chaque fil est lui-même constitué d'environ 3000 monofilaments 14 de carbone de haut module disposés parallèlement les uns par rapport aux autres. En développé, on constate que le point de tissage employé est le point taffetas, c'est-à-dire que les fils 12 ont une forme aplatie, voire en bande. Le tissage est dit équilibré, à savoir qu'il y a autant de fils de chaîne que de fils de trame. De plus, le tissage est serré et il n'y a donc pas de vide visible entre les points. L'angle entre le trame et la chaîne est compris entre 15 et 45 degrés, de préférence 30 degrés. L'épaisseur du tube est définie au niveau de l'intersection d'un fil de trame et d'un fil de chaîne par leur superposition.

Le diamètre des filaments 14 composant un fil 12 est en moyenne de 5 à 8 microns. Si de nombreux matériaux tels que le verre, l'aramide ou le kevlar, peuvent être envisagés pour ces filaments, il s'est avéré que les fibres de carbone présentent un compromis particulièrement intéressant entre les dimensions et la résistance voulue pour le produit final. Tel qu'illustré, l'épaisseur optimale de la tresse 10 a été établie entre 0,1 et 0,5 millimètre pour un diamètre extérieur de 1 à 4 millimètres.

Sur la figure 2 est illustrée une partie d'élément de monture de lunettes 50 réalisé à partir d'une tresse 10 par imprégnation de résine epoxy 20 durcie par la suite. Pour obtenir les résultats escomptés, il s'est avéré que le taux volumique de filaments doit être supérieur à 50 pour-cent car la résistance est proportionnelle à ce pourcentage de filaments, mais ne doit pas dépasser 60 pour-cent afin d'éviter les risques de profilés cassants. Pour ce, le surplus de résine est enlevé après l'imprégnation faisant que, de par la géométrie particulière de la tresse 10, cette proportion est respectée. Dans cette configuration, la résine se situe alors dans les interstices entre les filaments et au niveau des points de tissage.

L'originalité de cette résine epoxy est dans son mode de réticulation. Pour des besoins de transformation, la réticulation s'effectue en deux étapes. La première se déroule à basse température, de l'ordre de 80°C, grâce à un catalyseur du type amine aliphatique tel qu'amino-éthylpipérazine qui n'engendre qu'une réticulation partielle donnant naissance à un semi-produit. La réticulation finale se fait à haute température de l'ordre de 180°C par l'intermédiaire d'une diamine aromatique tel que le diaminodiphényl-méthyle provoquant l'obtention du produit final. Les pourcentages respectifs de ces catalyseurs sont de 0,1 à 0,8 pour-cent et de 3 à 15 pour-cent.

En alternative, on peut également utiliser un durcisseur unique du type amine aliphatique tel qu'un diamine cyclo aliphatique permettant une première réticulation toujours à 80°C puis une seconde réticulation définitive à 130°C. On passe alors par une transition vitreuse, dans un état malléable autorisant un ultime façonnage à ce moment.

Les caractéristiques mécaniques obtenues avec l'élément selon l'invention sont comparées, dans le tableau ci-dessous avec les caractéristiques d'un élément en plastique et en métal de section similaire.

3

| CARACTERISTIQUES | ACETATE DE CELLULOSE | METAL | JP 60-095422 | COMPOSITE INVENTIF |
|---|---|---|---|---|
| Module longitudinal E | 1 700 MPa | 180 000 MPa | 2-3 000 Mpa | 147 000 MPa |
| Module de cisaillement G | - | 60 000 MPa | - | 17 000 MPa |
| Contrainte de rupture en traction | 38 MPa | 800 MPa | 2 000 Mpa | 1 000 MPa |
| Allongement | 36,5 % | 3 à 5 % | | 0,6 % |
| Densité | 1,26 | 8,9 | | 1,56 |

Comme on peut le constater, le matériau composite selon l'invention présente tous les avantages en caractéristiques mécaniques du métal et ce avec une densité proche du plastique et en tout cas inférieure à 2. Si l'on considère que la moitié du poids d'une monture de lunettes est formée par le poids des deux cercles, on comprend tout l'avantage en poids et tenue mécanique de cercles réalisés selon l'invention.

Sur les figures 3 sont illustrées les différentes étapes d'un procédé de fabrication d'un cercle selon l'invention. Certaines transformations étant assimilables à des pliages, il est fortement recommandé que la tresse tubulaire creuse soit initialement remplie par un matériau inerte (16 sur la figure 1) pour éviter son écrasement. A cette fin, on peut tisser la tresse autour d'un corps cylindrique en mousse de polyuréthane souple, ou en élastomère tel qu'un éthylène-propylène diène monomère ou un corps formé d'une juxtaposition de fils parallèles de polyester, lesquels matériaux peuvent supporter sans se dégrader la température de l'ordre de 130°C à 180°C nécessaire pour la seconde réticulation. Ces éléments peuvent être supprimés en fin de transformation ou bien laissés en place car ils n'interviennent pas sur la tenue du matériau sans non plus l'altérer.

En référence à la figure 3a, l'imprégnation se fait dans un bac 60 à température ambiante. La tresse tubulaire passe entre des rouleaux 62 disposés entre quinconce et immergée dans la résine 20. A la sortie du bac, un dispositif d'essorage 64 élimine la résine en surplus. Le dosage volumétrique résine/fibres se fait naturellement de par la forme et le mode de tissage de la tresse qui ne laisse qu'un volume déterminé pour les interstices dans lesquels peut se loger cette résine.

La tresse préimprégnée 45 est alors découpée suivant la longueur désirée du cercle. On la dispose ensuite dans un outillage 70 illustré sur la figure 3b qui comprime la tresse en lui donnant la forme drageoir. Bien évidemment, le pourtour externe de cette forme drageoir, tel que vu en coupe transversale, peut être rectangulaire, cylindrique ou comporter des rainures, et/ou la section de cette forme peut légèrement varier dans le sens longitudinal de la tresse selon des considérations esthétiques. Cette tresse est alors chauffée sous une pression P1 d'environ 5 à 8 bars et à une température T1 de l'ordre de 80°C pendant environ 10 à 25 minutes selon la nature du durcisseur pour déclencher une première réticulation partielle. Une fois l'outil 70 refroidi, on récupère un jonc 48 composite en forme de drageoir qui peut, si nécessaire, être stocké en tant que produit semi-fini.

Le jonc composite 48 est ensuite façonné, tel qu'illustré sur la figure 3c, autour d'un mandrin 80 ayant la forme du cercle que l'on veut obtenir. Ce jonc est enserré entre le mandrin 80 et une molette 82 et en même temps, il est chauffé à une température T2 de l'ordre de 130°C ou 180°C pendant environ 15 à 25 minutes selon la nature du durcisseur de façon à déclencher la réticulation finale du composite. Après refroidissement, le cercle composite entourant le mandrin est légèrement écarté afin de le dégager. Cet

4

écartement, relativement faible, permet d'une part de le dégager du mandrin et d'autre part d'installer par la suite le verre dans le cercle. Les durées nécessaires de chauffage pour les réticulations peuvent être réduites à environ 2 à 5 minutes en ajoutant des agents accélérateurs.

Préalablement à la réticulation finale, on peut comprimer chaque extrémité du jonc pour créer une surépaisseur 55 constituant par la suite des blocs de fermeture, également appelés serre-cercles.

Par ailleurs, il est tout à fait envisageable de fabriquer de manière analogue d'autres éléments de monture de lunettes, la forme du moule 70 de la figure 3b étant modifiée en conséquence. Par exemple, on peut concevoir une branche de lunette ayant un premier quart aplati et le reste de section ronde, carrée, polygonale ou autre, le pliage ne s'effectuant alors que sur la partie aplatie.

Aux fins d'assemblage, il est possible d'insérer des éléments métalliques ou organiques dans le jonc composite 48 intermédiaire, notamment pour réaliser des platines de fixation pour d'autres éléments tels que pont, support-plaquette ou enjoliveur.

L'assemblage par collage peut être effectué de manière absolument fiable pour autant que les surfaces de contact soient suffisantes quant à leur superficie et leur forme enrobante. Par exemple, on peut réaliser un collage d'un cercle composite et d'un pont réalisé en plastique polyamide chargé de carbone grâce à une colle epoxy par exemple celle commercialisée sous la dénomination AW 106 par la Société CIBA ou celle commercialisée sous la dénomination Agonet P208 par la Société DEGUSSA. L'assemblage obtenu possède une résistance au cisaillement équivalente à celle des brasures à l'argent sur montures métalliques soit une absence de rupture avec une force appliquée de 500 newtons. Ces caractéristiques remarquables de collage peuvent être améliorées en augmentant la rugosité des surfaces par adjonction de micro-billes de verre dans la résine ou en réalisant un sablage de surface.

On peut également envisager de surmouler sur le cercle les extrémités d'éléments réalisés par injection de matière plastique. Il est également possible de sertir des pièces tels que des enjoliveurs sur l'élément composite solidifié.

Dans le cas de décoration du cercle uniquement, on emploie de préférence des peintures polyépoxydes possédant une adhérence très importante. De telles peintures peuvent être alors employées sous forme de poudrage électrostatique ou en lit fluidisé pour des applications de forte épaisseur lorsque l'on souhaite masquer la structure tissée du composite. Bien évidemment, on peut toujours agir soit physiquement soit chimiquement pour obtenir des effets esthétiques particuliers.

Dans le cas de monture intégrant des cercles composites et des pièces thermoplastiques (tel que polyamide 12) on préfère des finitions à base de polyester-polyuréthane pour leur qualité d'adhésion et leur température de polymérisation suffisamment basse pour ne pas altérer les thermoplastiques.

Il est également possible de mélanger initialement aux monofilaments de carbone d'autres filaments de couleurs différentes, tel que des filaments jaune d'aramide ou des filaments de carbone teintés, pour obtenir une tresse tubulaire de couleur autre que noir. De manière analogue, la tresse tubulaire peut elle même être tissée de fils de couleurs différentes et devenir ainsi multicolore. Par ailleurs, la résine peut elle même être colorée.

De nombreuses améliorations peuvent être apportées à ces éléments tubulaires de monture de lunettes en résine epoxy renforcée d'une tresse de carbone dans le cadre de cette invention.

**Revendications**

1.  Elément de monture de lunettes (50) en résine synthétique renforcée de fibres, caractérisé en ce qu'il ne comprend qu'une seule tresse tubulaire périphérique (10) tissée de fibres (14) longues de renfort.

2.  Elément de monture de lunettes selon la revendication 1, caractérisé en ce que la tresse tubulaire (10) est tissée de fils (12) composés d'une pluralité de monofilaments longs (14) de carbone.

3.  Elément de monture de lunettes selon la revendication 2, caractérisé en ce que les monofilaments longs de carbone (14) composant un fil (12) de la tresse tubulaire (10) sont parallèles.

4.  Elément de monture de lunettes selon la revendication 2 ou 3, caractérisé en ce que la tresse tubulaire (10) est un tissage de 4 à 8 fils (12) selon le modèle taffetas avec un angle compris entre 15 et 45 degrés par rapport à l'axe longitudinal de l'élément.

5.  Elément de monture de lunettes selon la revendication 4, caractérisé en ce que la tresse tubulaire (10) a un diamètre compris entre 1 et 5 millimètres et en ce que son épaisseur est comprise entre 0,1 et 0,5 millimètre.

EP 0 502 796 B1

6. Elément de monture de lunettes selon l'une des revendications précédentes, caractérisé en ce que le taux d'imprégnation volumique de résine (20) est compris entre 40 et 50 pour-cent.

7. Elément de monture de lunettes selon l'une des revendications précédentes dont la résine synthétique (20) est un epoxy de bisphénol de type A, caractérisé en ce que la résine comprend 0,1 à 0,8 pour-cent d'un premier durcisseur amine aliphatique et 3 à 50 pour-cent d'un second durcisseur diamine aromatique.

8. Elément de monture de lunettes selon l'une des revendications précédentes dont la résine synthétique (20) est un epoxy de bisphénol de type A, caractérisé en ce que la résine comprend 30 à 50 pour-cent d'un durcisseur unique du type diamine cyclo aliphatique.

9. Elément de monture de lunettes selon l'une des revendications précédentes, caractérisé en ce que la tresse tubulaire (10) est tissée à partir de fils ou monofilaments de couleurs différentes.

10. Elément de monture de lunettes selon l'une des revendications précédentes, caractérisé en ce qu'une partie d'élément complémentaire est accrochée par insertion dans la tresse tubulaire imprégnée.

11. Elément de monture de lunettes selon l'une des revendications précédentes, caractérisé en ce qu'une partie d'élément complémentaire est collée au moyen d'une colle epoxy contre la tresse tubulaire solidifiée par la résine durcie.

12. Elément de monture de lunettes selon l'une des revendications précédentes, caractérisé en ce qu'une partie d'élément complémentaire en plastique est surmoulée pardessus la tresse tubulaire solidifiée par la résine durcie.

13. Procédé de fabrication d'un élément de monture de lunettes selon la revendication 7, caractérisé en ce que :
   - on remplit le coeur de la tresse tubulaire (10) de l'élément d'un matériau de remplissage inerte (16), puis on imprègne de résine la tresse tubulaire, et ce par l'extérieur,
   - on élabore la forme de la section transversale de l'élément (50) que l'on stabilise par déclenchement du premier durcisseur à température inférieure à 100°C,
   - on façonne la forme tridimensionnelle de l'élément (50) que l'on durcit définitivement par déclenchement du second durcisseur à température supérieure à 160°C,
   - si désiré, on retire le matériau de remplissage (16) du coeur de l'élément.

**Claims**

1. A spectacle frame component (50) made of synthetic fibre-reinforded resin, characterised in that it comprises only a single peripheral tubular braid (10) woven from long reinforcing fibres (14).

2. A spectacle frame component according to claim 1, characterised in that the tubular braid (10) is woven from threads (12) made up of a number of long carbon monofilaments (14).

3. A spectacle frame component according to claim 2, characterised in that the long carbon monofilaments (14) making up each thread (12) of the tubular braid (10) are parallel.

4. A spectacle frame component according to claim 2 or 3, characterised in that the tubular braid (10) is a taffeta-like woven structure of four to eight threads (12) at an angle between 15 and 45° to the longitudinal axis of the component.

5. A spectacle frame component according to claim 4, characterised in that the tubular braid (10) has a diameter between 1 and 5 mm and its thickness is between 0.1 and 0.5 mm.

6. A spectacle frame component according to any of the preceding claims, characterised in that the proportion of impregnated resin (20) is between 40 and 50% by volume.

6

7. A spectacle frame component according to any of the preceding claims and in which the synthtic resin (20) is a type A bisphenol epoxy, characterised in that the resin comprises 0.1 to 0.8 of a first aliphatic amine hardening agent and 3 to 50% of a second aromatic diamine hardening agent.

8. A spectacle frame component according to any of the preceding claims, in which the synthetic resin (20) is a type A bisphenol epoxy, characterised in that the resin contains 30 to 50% of a single cyclo-aliphatic diamine-type hardening agent.

9. A spectacle frame component according to any of the preceding claims, characterised in that the tubular braid (10) is woven from threads or monofilaments of different colours.

10. A spectacle frame component according to any of the preceding claims, characterised in that a part of an additional component is attached by insertion into the impregnated tubular braid.

11. A spectacle frame component according to any of the preceding claims, characterised in that a part of an additional component is stuck by an epoxy adhesive to the tubular braid solidified by the hardened resin.

12. A spectacle frame component according to any of the preceding claims, characterised in that a part of an additional plastics component is moulded on to the tubular braid solidified by the hardened resin.

13. A method of manufacturing a spectacle frame component according to claim 7, characterised in that :
   - the core of the tubular braid (10) of the component is filled with an inert filling material (16), after which the tubular braid is impregnated with resin from the exterior,
   - the cross-section of the component (50) is shaped and stabilised by starting hardening the first hardening agent at temperature below 100°C,
   - the component (5) is shaped in three dimensions and finally hardened by starting hardening the second hardening agent at a temperature above 160°C, and
   - optionally, the filling material (16) is removed from the core of the component.

**Patentansprüche**

1. Brillenfassungselement (50) aus faserverstärktem Kunstharz, dadurch gekennzeichnet, daß es nur ein einziges peripheres schlauchförmiges Geflecht (10) umfaßt, das aus langen Verstärkungsfasern (14) gewebt ist.

2. Brillenfassungselement nach Anspruch 1, dadurch gekennzeichnet, daß das schlauchförmige Geflecht (10) aus Fäden (12) gewebt ist, die sich aus einer Vielzahl von langen Kohlenstoff-Monofilamenten (14) zusammensetzen.

3. Brillenfassungselement nach Anspruch 2, dadurch gekennzeichnet, daß die langen Kohlenstoff-Monofilamente (14), welche einen Faden (12) des schlauchförmigen Geflechts (10) bilden, parallel angeordnet sind.

4. Brillenfassungselement nach Anspruch 2 oder 3, dadurch gekennzeichnet, daß das schlauchförmige Geflecht (10) ein Gewebe aus 4 bis 8 Fäden (12) nach Taftschema mit einem Winkel zwischen 15 und 45 Grad in bezug auf die Längsachse des Elements ist.

5. Brillenfassungselement nach Anspruch 4, dadurch gekennzeichnet, daß das schlauchförmige Geflecht (10) einen Durchmesser zwischen 1 und 5 mm besitzt und daß seine Dicke zwischen 0,1 und 0,5 mm beträgt.

6. Brillenfassungselement nach einem der vorhergehenden Ansprüche, dadurch gekennzeichnet, daß der Imprägnierungsgrad mit Harz (20) zwischen 40 und 50 Volumenprozent beträgt.

7. Brillenfassungselement nach einem der vorhergehenden Ansprüche, dessen Kunstharz (20) ein Epoxid vom Bisphenol A ist, dadurch gekennzeichnet, daß das Harz zu 0,1 bis 0,8 Prozent einen ersten Härter, bestehend aus einem aliphatischen Amin, und zu 3 bis 50 Prozent einen zweiten Härter, bestehend aus einem aromatischen Diamin, enthält.

8. Brillenfassungselement nach einem der vorhergehenden Ansprüche, dessen Kunstharz (20) ein Epoxid vom Bisphenol A ist, dadurch gekennzeichnet, daß das Harz zu 30 bis 50 Prozent einen einzigen Härter von der Art eines cycloaliphatischen Diamins enthält.

9. Brillenfassungselement nach einem der vorhergehenden Ansprüche, dadurch gekennzeichnet, daß das schlauchförmige Geflecht (10) aus Fäden oder Monofilamenten verschiedener Farbe gewebt ist.

10. Brillenfassungselement nach einem der vorhergehenden Ansprüche, dadurch gekennzeichnet, daß ein Teil eines ergänzenden Elementes durch Einsetzen in das imprägnierte schlauchförmige Geflecht befestigt wird.

11. Brillenfassungselement nach einem der vorhergehenden Ansprüche, dadurch gekennzeichnet, daß ein Teil eines ergänzenden Elementes mittels eines Epoxidklebers an das durch das ausgehärtete Harz verfestigte schlauchförmige Geflecht angeklebt wird.

12. Brillenfassungselement nach einem der vorhergehenden Ansprüche, dadurch gekennzeichnet, daß ein Teil eines ergänzenden Elementes aus Kunststoff an das durch das ausgehärtete Harz verfestigte schlauchförmige Geflecht angegossen wird.

13. Verfahren zur Herstellung eines Brillenfassungselements nach Anspruch 7, dadurch gekennzeichnet, daß:
    - das Innere des schlauchförmigen Geflechts (10) des Elements mit einem inerten Füllmaterial (16) gefüllt wird und anschließend das schlauchförmige Geflecht von außen her mit Harz imprägniert wird,
    - die Form des Querschnitts des Elements (50) ausgearbeitet wird, welches durch Auslösung des ersten Härters bei einer Temperatur von weniger als 100 ° C stabilisiert wird.
    - die dreidimensionale Form des Elements (50) gestaltet wird, welches endgültig durch Auslösung des zweiten Härters bei einer Temperatur von mehr als 160 ° C ausgehärtet wird,
    - falls gewünscht, das Füllmaterial (16) aus dem Inneren des Elements entfernt wird.

FIG 1

FIG 2

P1  T1

FIG 3a

FIG 3b

82  T2  48

50

55

80

FIG 3c